# EUROPÄISCHE PATENTSCHRIFT

(11) **EP 3 812 121 B1**
(45) Veröffentlichungstag und Bekanntmachung des Hinweises auf die Patenterteilung: **15.06.2022**
(21) Anmeldenummer: 20198803.7
(22) Anmeldetag: 28.09.2020
(51) Int. Cl.: B29C 45/14, B60J 1/00

(54) **FAHRZEUGTÜR UND DEREN HERSTELLUNG**
VEHICLE DOOR AND PRODUCTION OF THE SAME
PORTE DE VÉHICULE ET SA FABRICATION

(30) Priorität: 25.10.2019 DE 102019216518
(43) Veröffentlichungstag der Anmeldung: 28.04.2021
(73) Patentinhaber: Magna Exteriors GmbH, 63877 Sailauf (DE)
(72) Erfinder: GÖTZELMANN, Johannes, 97237 Altertheim (DE); BENITEZ, Miguel, 63533 Mainhausen (DE)
(74) Vertreter: Rausch, Gabriele

(56) Entgegenhaltungen:
- DE-A1- 10 134 697
- DE-A1-102010 014 510

## Beschreibung

Die Erfindung betrifft eine Fahrzeugtür, die mindestens ein Trägerteil aus Kunststoff sowie mindestens zwei Rahmenteile umfasst, wobei die Rahmenteile über Verbindungsknoten miteinander verbunden sind.

Die Erfindung betrifft des Weiteren ein Verfahren zur Herstellung für eine Fahrzeugtür.

### Stand der Technik

Im Automobilbau werden hohen Anforderungen an die Dauerfestigkeit einer Verbindung aus einem Metallrohr und einer Kunststoffkomponente gestellt. Dies macht regelmäßig eine spezielle Geometrie des Metallrohrs zur sicheren Kraftübertragung erforderlich, welche nur durch zusätzliche und kostenintensive Prozessschritte realisiert werden kann. Dasselbe gilt für das Verfahren zur Herstellung von Türen oder Heccklappen im Fahrzeugbau. Kunststofftüren werden im Normalfall durch separat verschweißte Aluminium- oder Stahlverstärkungsrahmen verstärkt, die dann mit dem Innenteil der Tür sowie dem Außenpanel mittels Kleben gefügt werden.

Aus der DE 100 22 360 A1 ist eine solche Tür bzw. ein derartiges Verfahren als bekannt zu entnehmen, bei welcher ein Türträger mit wenigstens einem Metallträgerelement, welches einstückig oder mehrteilig ausgebildet sein kann, vorgesehen ist, welches zumindest partiell mit Kunststoff versehen ist. Dabei ist in dem vorliegenden Fall die Anschlussstelle des jeweiligen eines Profils an dem anderen Profil mit Kunststoff umspritzt, um hierdurch eine entsprechende Verbindung der beiden Bauteile herzustellen.

Aus der WO 2011 124 305 A1 ist eine Fahrzeugtür bekannt, deren Metallträgerelemente partiell mit Kunststoff versehen sind und als Innenhochdruckumformteile ausgestaltet sind. Im Anschluss an einem Biegeprozess des Metallträgerelements werden das Basis-Metallträgerelement sowie unter anderem die Quer-Metallträgerelemente in das geöffnete Innenhochdruckumform-Spritzguss-Werkzeug eingelegt. Dann erfolgt das Schließen des Werkzeugs und jeweilige Innenhochdruckumformstempel an den Enden des Basis-Metallträgerelements fahren in dessen Öffnungen. Durch den Innenhochdruck wird das Profil an die Kavitätswand des Werkzeugs gedrückt und nimmt seine finale Kontur an. Gleichzeitig werden die Einleger - insbesondere die Quer-Metallträgerelemente durch Hydroclinchen mit dem Basis-Metallträgerelement formschlüssig verbunden.

Nach dem Innenhochdruckumform-Prozessschritt wird nun im gleichen Werkzeug der Kunststoff für Befestigung weiterer Bauteile eingespritzt. Nach einer Abkühlphase kann das Strukturteil bzw. der Türträger aus dem Werkzeug entnommen werden.

Die unveröffentlichte DE 10 2019 121 725 beschreibt eine Verbindung aus einem Metallrohr und einer Kunststoffkomponente, insbesondere für ein Fahrzeug, mit einer in einem Verbindungsbereich angeordneten Formgebungskomponente, wobei das Metallrohr in dem Verbindungsbereich eine an die Formgebungskomponente angepasste Form aufweist. Bei der Verbindung handelt es sich insbesondere um eine torsionssteife Verbindung. Die Erfindung betrifft außerdem eine Formgebungskomponente für eine Verbindung aus einem Metallrohr und einer Kunststoffkomponente, mit einem ersten Abschnitt zur Anordnung in einem Verbindungsbereich des Metallrohrs, wobei der erste Abschnitt eine im Wesentlichen zylindrische Grundform mit mindestens einer an einer Längsseite angeordneten Aussparung aufweist.

Aus der DE 100 14 332 A1 ein Verbundbauteil und ein Verfahren zu seiner Herstellung bekannt. Dabei wird eine als Hohlprofil ausgebildetere Grundkörper teilweise oder vollständig mit Kunststoff ummantelt, um eine Verbindung zu einem Kunststoffbauteil herzustellen.

Aus der AT 54 360 B ist ein Abzweig für biegsame Leitungen bekannt, wobei ein äußeres Hüllelement aus Polymer die Leitungen umfasst.

Aus der DE 10 2010 014 510 A1 ist eine Tür für ein Kraftfahrzeug bekannt, mit einem Türträger mit wenigstens einem Metallträgerelement, das partielle mit Kunststoff versehenen ist. Das Metallträgerelement ist als Innenhochdruckteil ausgebildet.

DE 101 34 697 A1 zeigt einen Fahrzeugtür mit einem Türinnenblech, an dem ein Kunststoff-Trägerteil angebracht ist, das die Türverkleidung trägt.

### Beschreibung der Erfindung

Der Erfindung liegt die Aufgabe zugrunde, eine Fahrzeugtür zu schaffen, deren Verstärkungselemente aus einem Verbund von Metall und Kunststoff hergestellt sind, wobei Torsionswiderstandsstrukturpunkte im Spritzgussverfahren erzeugt werden.

Unter Fahrzeugtür ist dabei sowohl eine normale Tür als auch eine Heckklappe zu verstehen.

Die Aufgabe wird gelöst mit einem Fahrzeugtür, die mindestens ein Trägerteil aus Kunststoff sowie mindestens zwei Rahmenteile umfasst, wobei die Rahmenteile über Verbindungsknoten miteinander verbunden sind, wobei die Verbindungsknoten durch Umspritzen herstellbar sind, wobei gleichzeitig das Trägerteil aus demselben Kunststoffmaterial an den Verbindungsknoten angebunden ist.

Die erfindungsgemäße Fahrzeugtür lässt sich mit einem Spritzguss-Vorgang herstellen, wobei die Kunststoffbauteile sowohl des Trägerteils als auch der Verbindungsknoten gleichzeitig gespritzt werden.

Es ist dabei von Vorteil, dass der Verbindungsknoten aus Metallrohren und darin eingesteckten Einlegern mit Ausnahmen aufgebaut sind, wobei das Metallrohr beim Umspritzen in Richtung auf den Einleger kollabiert.

Durch diese Methode lässt sich eine sehr gute Anbindung der Metallrohre aneinander herstellen, da dadurch Hinterschneidungen auftreten, die einen axiale Sicherung darstellen.

Um jede Art von möglicher Verbindung herstellen zu können ist es von Vorteil, dass der Einleger zwei oder mehr Schenkel zum Einstecken in jeweils ein Metallrohr aufweist.

Dabei liegt der Winkel zwischen den Schenkeln zwischen 180°und 30°.

Die Umspritzung des Verbindungsknotens ist teilweise vom Trägerteil dargestellt. Das bedeutet, dass die manschettenförmige Umspritzung des Verbindungsknotens nur an der vom Träger teilabgewandten Seite erfolgt, während der am oder im Trägerteil angeordnete Bereich durch das Material des Trägerteils gebildet wird.

Das erfindungsgemäße Verfahren weist folgende Schritte auf:
Platzieren des Einlegers in den Metallrohren; und
Einlegen des ausgestalteten Rahmens mit Einlegern an den Verbindungsknoten in ein Spritzgusswerkzeug,
Umspritzen der Verbindungsknoten, wobei das Metallrohr in dem Verbindungsbereich derart umgeformt wird, dass es eine an den Einleger angepasste Form aufweist,
Gleichzeitiges Spritzen des Trägerteils.

Das erfindungsgemäße Verfahren realisiert eine sehr einfache Art mit einem Spritzguss Vorgang sowohl verstärken die Rahmenstrukturen als auch ein Kunststoff-Trägerteil herzustellen.

### Ausführungsbeispiel

Die Erfindung wird nachfolgend anhand eines Ausführungsbeispiels unter Bezugnahme auf die beigefügten Zeichnungen beispielhaft beschrieben.

Es zeigen:
- Figur 1: eine beispielhafte Heckklappe,
- Figur 2: eine schematische Fahrzeugtür,
- Figur 3: eine schematische Schnittdarstellung einer beispielhaften Verbindung,
- Figur 4 und 5: eine Rohr-Rohr-Verbindung mit Spitzgusswerkzeug,
- Figur 6: eine Eckvariante.

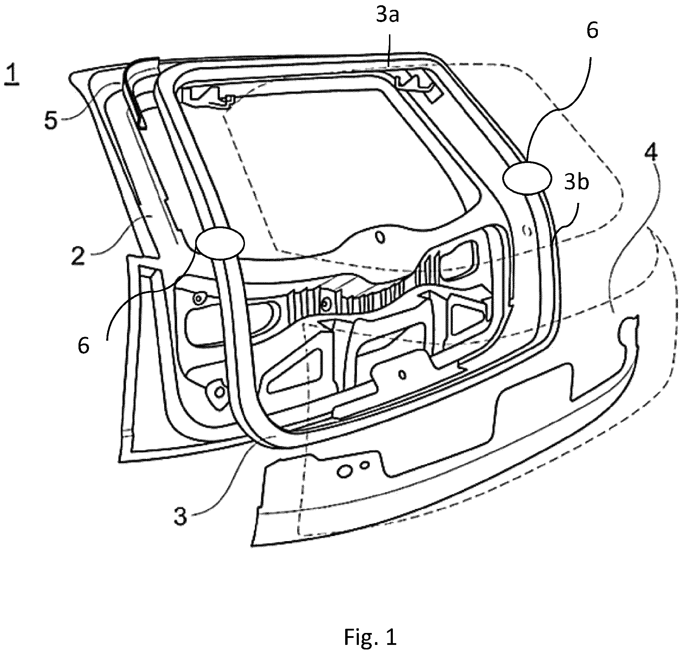

In Figur 1 sind die Hauptbestandteile einer Fahrzeugtür 1, einer Heckklappe, dargestellt. Als Basis der Fahrzeugtür dient ein Trägerteil 2, das aus faserverstärkten Kunststoffen hergestellt ist. Der versteifende Rahmen 3 ist entweder eine geschlossene Form oder auch eine nichtgeschlossene, beliebige Form aus Metall oder Kunststoffmaterialen. Die Verkleidungsteile 4 werden mit dem Trägerteil 2 verbunden. Zur Versteifung der Fahrzeugtür 1, der Heckklappe sind Versteifungselemente 5 vorgesehen, die in diesem Ausführungsbeispiel aus Metall hergestellt sind.

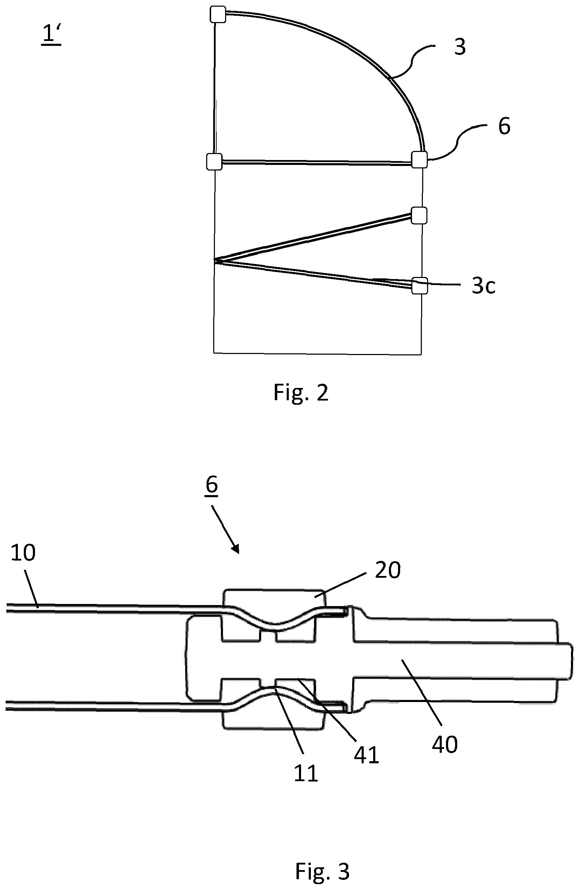

Ein solcher Rahmen 3 wird in der erfindungsgemäßen Lösung aus einzelnen Rahmenteilen 3a, 3b mit Verbindungsknoten 6 hergestellt. Im dargestellten Beispiel sind zwei Rahmenteile 3a und 3b des Rahmens 3 vorhanden, aber ist auch ein Aufbau aus einer Vielzahl von Rahmenteilen möglich. Beim Verfahren zur Herstellung einer festen Verbindung werden die Rahmenteile, die aus Metallrohren bestehen, mit einer metallischen Einlage versehen, was anhand von Figur 3 noch näher beschreiben wird.

In Figur 2 ist eine schematische Seitentür 1' mit ihrem Rahmen 3 dargestellt. Ein solche Seitentür weist eine Innenverkleidung aus Kunststoff auf, die mit dem Rahmen und der Außenhaut der Seitentür verbunden wird. Zusätzlich zur Ausführungsform der Heckklappe enthält dieser Rahmen 3 noch Verstärkungselemente für den Seitenaufprallschutz, die als Rahmenteile 3c ausgebildet sind. An den Verbindungsknoten 6 sind die metallischen Rahmenteile des Rahmens 3 verbunden.

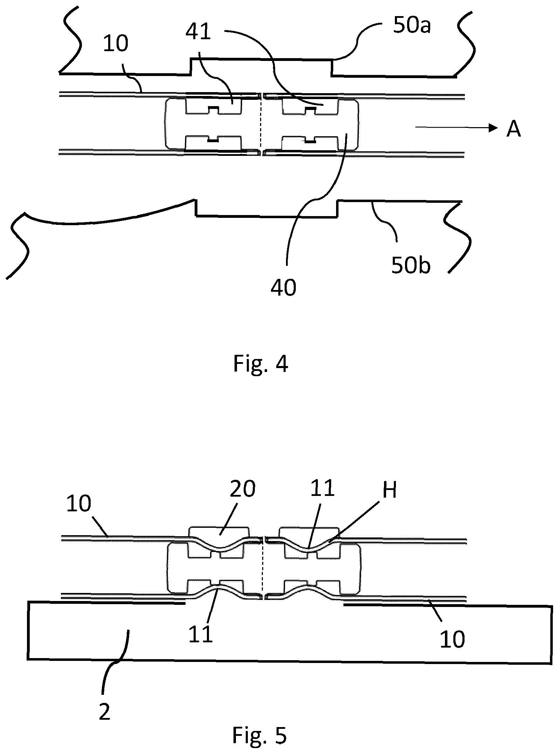

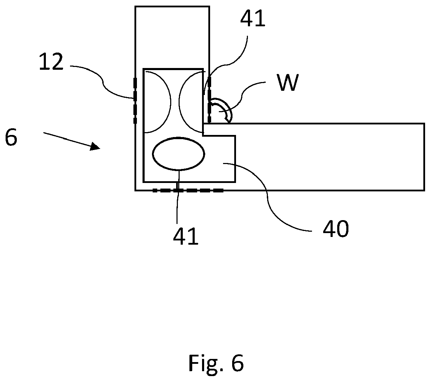

In Figur 3 ist ein Verbindungsknoten 6 an einem Metallrohr 10 gezeigt, und zwar nachdem die Verbindung mit dem Spritzgussverfahren nach der DE 10 2019 121 725 A1 bereits abgeschlossen ist. Bei dem Metallrohr 10 handelt es sich um ein handelsübliches Metallrohr, das vorab in die gewünschte Form und/oder den gewünschten Querschnitt gebracht werden kann. Mit dem Metallrohr 10 wird in diesem gezeigten Beispiel ein Einleger 40 verbunden, bei dem es sich in diesem Beispiel um eine Welle aus Metall handelt. Wichtig ist dabei das der Einleger 40 eine Struktur mit einer im Radius nach innen versetzten Ausnehmung 41 aufweist, die für den nachfolgenden Verbindungsprozess als Hinterschneidungsbereich H dient. Der Einleger 40 weist einen Außendurchmesser auf, der in etwa dem Innendurchmesser des Metallrohres entspricht. Zudem endet der Einleger einseitig oder beidseitig in einen zylindrischen Bereich, der zur leichten Einführung des Einlegers in das Metallrohr dient. Bei der Verbindung zweier Metallrohre, wie in Figur 5 oder Figur 6 gezeigt, dient der Einleger 40 für beide stumpf aufeinander endenden Metallrohre als innere Führung und zur Positionierung.

Ein solcher Einleger 40 weist dabei Ausnehmungen 41 auf, die jeweils für die Befestigung eines der beiden Metallrohre 10 dienen. Die Ausnehmungen 41 am Einleger 40 sind radial verteilt, beispielsweise handelt es sich um 4 gleichmäßig über den Radius verteilte Ausnehmungen 41.

Der in Figur 6 gezeigte Einleger 40 besteht aus einem L-förmigen Bauteil und weist Ausnehmungen 41 an seinen zwei Schenkeln auf, die senkrecht zueinander angeordnet sind.

Die Metallrohre 10 werden als Rahmen 3 in das Spritzgusswerkzeug für das Trägerteil der Heckklappe 1 oder die Innenverkleidung der Fahrzeugtür 1', lose über den Einleger 40 verbunden, eingelegt.

Zur Ausbildung des Verbindungsknotens 6 zwischen den einzelnen Metallrohren 10 weist das Spritzgusswerkzeug 50a, 50b eine angepasste Struktur auf, die der Form 20 des herzustellenden Verbindungsknoten 6 entspricht.

In Figur 4 ist ein Spritzgusswerkzeug angedeutet, dessen Bauteile ober- und unterhalb der Metallrohre angeordnet sind. Das Spritzgusswerkzeugt ist für das Trägerteil ausgeformt und zusätzlich für die Ausbildung der Verbindungknoten.

Während des Spritzprozesses für das Trägerteil 2 oder die Innenverkleidung wird jedes Metallrohr 10 am Verbindungsknoten 6 derart durch den Spritzdruck umgeformt, dass es eine an die Einleger 40 angepasste Form aufweist. Die Umformung des Metallrohrs 10 erfolgt durch den Druck des Spritzprozesses, der zwischen 300 bar und 600 bar beträgt. Durch den Druck wird das Metallrohr and den Ausnehmungen 41 des Einlegers in Richtung Rohrmitte eingedrückt, wobei das Kunststoffmaterial eine manschettenartige Form 20 ausbildet. Um diesen Druck an den Verbindungsknoten zu erreichten, muss das Kunststoffmaterial an den Verbindungsknoten in das Werkzeug eingespritzt werden.

In Figur 3 oder 5 ist die entstehende Verjüngung 11 des Metallrohres 10 im Bereich der Ausnehmungen 41 des Einlegers 40 dargestellt. Durch den Druck des eingespritzten Kunststoffes kollabiert das Metallrohr 10 in Richtung auf den Einleger 40 hin.

Die durch die Umspritzung gebildete Manschette, bzw. Form 20 greift derart in die Ausnehmungen 41 ein, dass die Verjüngung 11 eine Hinterschneidung für das Kunststoffmaterial in axialer Richtung A bildet.

Das Trägerteil 2 ist über den Hinterschneidungsbereich H mit dem Verbindungsknoten 6 verbunden.

Figur 6 zeigt einen Eckverbindung, in der der Einleger einen L-Form aufweist. Die Ausnehmungen des Einlegers sind schematisch dargestellt. Sie liegen senkrecht und mit einem axialen Versatz zueinander. Die Bereiche 12 des Metallrohrs kollabieren beim Spritzvorgang in Richtung auf den Einleger.

Verbindungsknoten für mehrere Metallrohre sind ebenfalls umsetzbar. Hier muss dann der Einleger entsprechend umgeformt werden.

### Bezugszeichen

1 Fahrzeugtür
2 Trägerteil
3 Rahmen
3a, 3b, 3c Rahmenteile
4 Verkleidungsteile
5 Versteifungselemente
6 Verbindungsknoten
10 Metallrohr
11 Verjüngung
12 Bereich des Metallrohrs
20 Form
40 Einleger
41 Ausnehmung
50a, 50b Spritzgusswerkzeug
H Hinterschneidungsbereich

## Patentansprüche

1. Fahrzeugtür (1,1') , die mindestens ein Trägerteil (2) aus Kunststoff sowie mindestens zwei Rahmenteile (3a, 3b, 3c) umfasst, wobei die Rahmenteile (3a, 3b, 3c) über Verbindungsknoten (6) miteinander verbunden sind, **dadurch gekennzeichnet, dass** die Verbindungsknoten (6) durch Umspritzen herstellbar sind, wobei gleichzeitig das Trägerteil (2) aus demselben Kunststoffmaterial an den Verbindungsknoten (6) angebunden ist, wobei
der Verbindungsknoten (6) aus Metallrohren (10) und darin eingesteckten Einlegern (40) mit Ausnehmungen aufgebaut ist, wobei die Metallrohre (10) beim Umspritzen in Richtung auf den Einleger (40) kollabieren und der Einleger (40) zwei oder mehr Schenkel zum Einstecken in jeweils ein Metallrohr (10) aufweist.

2. Fahrzeugtür (1,1') nach Anspruch 1, **dadurch gekennzeichnet, dass** der Winkel (W) zwischen den Schenkeln zwischen 180°und 30°liegt.

3. Fahrzeugtür (1,1') nach einem der vorhergehenden Ansprüche, **dadurch gekennzeichnet, dass** die Umspritzung des Verbindungsknotens (6) teilweise vom Trägerteil (2) dargestellt ist.

4. Verfahren zur Herstellung einer Fahrzeugtür (1,1') nach einem der Ansprüche 1 bis 3, mit den folgenden Schritten:
Platzieren des Einlegers (40) in den Metallrohren (10); und
Einlegen des ausgestalteten Rahmens (3) mit Einlegern (40) an den Verbindungsknoten (6) in ein Spritzgusswerkzeug (50a, 50b),
Umspritzen der Verbindungsknoten (6), wobei das Metallrohr (10) in dem Bereich (12) des Metallrohrs (10) derart umgeformt wird, dass es eine an den Einleger (40) angepasste Form aufweist,
Gleichzeitiges Spritzen des Trägerteils (2).

## Claims

1. Vehicle door (1, 1') which comprises at least one support part (2) of plastics material and at least two frame parts (3a, 3b, 3c), wherein the frame parts (3a, 3b, 3c) are connected to one another by way of connection nodes (6), **characterized in that** the connection nodes (6) are able to be produced by insert-moulding, wherein the support part (2) of the same plastics material is simultaneously linked to the connection node (6), wherein
the connection node (6) is constructed from metal tubes (10) and inserts (40) which are plugged into the latter and have recesses, wherein the metal tubes (10) when insert-moulding collapse in the direction towards the insert (40) and the insert (40) has two or more legs for plugging into in each case one metal tube (10).

2. Vehicle door (1,1') according to claim 1, **characterized in that** the angle (W) between the legs is between 180°and 30°.

3. Vehicle door (1,1') according to one of the preceding claims, **characterized in that** the insert-moulding of the connection node (6) is partially represented by the support part (2).

4. Method for producing a vehicle door (1, 1') according to one of Claims 1 to 3, said method comprising the following steps:
placing the insert (40) into the metal tubes (10); and
inserting the configured frame (3) with inserts (40) at the connection nodes (6) into an injection-moulding tool (50a, 50b);
insert-moulding the connection nodes (6), wherein the metal tube (10) in the region (12) of the metal tube (10) is formed in such a manner that said metal tube has a shape which is adapted to the insert (40);
simultaneously injection-moulding the support part (2).

## Revendications

1. Porte de véhicule (1, 1'), comprenant au moins une pièce de support (2) en matière plastique ainsi qu'au moins deux pièces de cadre (3a, 3b, 3c), les pièces de cadre (3a, 3b, 3c) étant reliées l'une à l'autre par des points de raccordement (6), **caractérisée en ce que** les points de raccordement (6) peuvent être fabriqués par enrobage, la pièce de support (2) de la même matière plastique étant en même temps liée aux points de raccordement (6), dans laquelle
le point de raccordement (6) est construit à partir de tubes métalliques (10) et d'éléments d'insertion (40) pourvus d'évidements, introduits dans ceux-ci, les tubes métalliques (10) s'affaissant en direction de l'élément d'insertion (40) lors de l'enrobage, et l'élément d'insertion (40) présentant deux ou plusieurs branches à introduire dans un tube métallique (10) respectivement.

2. Porte de véhicule (1, 1') selon la revendication 1, **caractérisée en ce que** l'angle (W) entre les branches est compris entre 180° et 30°.

3. Porte de véhicule (1, 1') selon l'une quelconque des revendications précédentes, **caractérisée en ce que** l'enrobage du point de raccordement (6) est représenté en partie par la pièce de support (2).

4. Procédé de fabrication d'une porte de véhicule (1, 1') selon l'une quelconque des revendications 1 à 3, comprenant les étapes suivantes consistant à :
placer l'élément d'insertion (40) dans les tubes métalliques (10) ; et
insérer aux points de raccordement (6) le cadre configuré (3) avec les éléments d'insertion (40) dans un moule de moulage par injection (50a, 50b),
enrober les points de raccordement (6), le tube métallique (10) étant façonné dans la zone (12) du tube métallique (10) de telle sorte qu'il présente une forme adaptée à l'élément d'insertion (40),
mouler simultanément la pièce de support (2).
